# EUROPEAN PATENT APPLICATION

(11) **EP 1 923 204 A2**
(43) Date of publication of application: **21.05.2008**
(21) Application number: 07020766.7
(22) Date of filing: 24.10.2007
(51) Int. Cl.: B29C 65/34, H01F 30/00

(54) **Welder for sleeves for joining plastic pipes**

(30) Priority: 15.11.2006 IT pd20060427
(71) Applicant: RITMO S.p.A., 35037 Teolo (Padova) (IT)
(72) Inventor: Bortoli, Renzo, 35038 - Torreglia (Padova) (IT)
(74) Representative: Forattini, Amelia

(57) **Abstract**

A welder for sleeves for joining plastic pipes, which includes a high-frequency AC/DC converter (11) which draws electric mains current, and a transformer (13) which draws the current from the converter (11) and sends it to the terminals (14, 15) to be connected to the sleeve (14, 15) to be welded. The transformer (13) has two separate secondary windings (16, 17), which can be inserted selectively by virtue of a control means, respectively a first secondary winding (16) for the low-voltage supply of a first pair (14) of terminals (14, 15) and a second secondary winding (17) for the high-voltage supply of a second pair (15) of terminals (14, 15).

## Description

The present invention relates to a welder for sleeves for joining plastic pipes.

A known system for joining lengths of pipes made of plastics for conveying fluids, provides for the uses of sleeves made of plastics which can undergo electric welding.

According to such conventional system, two pipes are inserted from opposite sides into a sleeve whose inside diameter is substantially similar to the outside diameter of the pipes. An electric resistor is embedded in the plastic sleeve and runs substantially along its entire extension. The resistors have power supply cables that are connected to a welder. Welding occurs by means of the heat generated by the electric resistor being supplied with electric current. The sleeves are throwaway because, once the welding is completed, they remain integrated in the pipe.

Two main types of sleeves are used for such welding: low-voltage sleeves and high-voltage sleeves.

The low-voltage sleeves are commonly used for pressurized systems, such as water and gas pipelines, and are welded with voltages which can vary between 8 and 48 V rms and a current which can reach 70 A. The voltage must be kept constant.

High-voltage sleeves are normally used both for systems subjected to pressure (for example water pipelines, gas pipelines, sanitary water feeds) and for other uses (for example civil and industrial drains, drainage systems), and are welded with typical voltages of 100-200 V rms and a current which can reach 10 A. They must be driven correctly by keeping the current constant.

Currently, specialized welders for each of the two types of sleeve described above are commercially available.

The power used in the prior art systems is converted with two main methods: phase cut (in practice, a synchronous scaling of the AC input voltage) and high-frequency conversions.

In high-voltage welders, phase cut is typically used, i.e., the mains voltage is scaled synchronously with respect to the frequency.

In low-voltage welders, both methods are used, i.e., the mains voltage applied to a transformer, which also operates at the mains frequency, is scaled, or a high-frequency converter is provided.

In so-called universal welders, i.e., welders for both high and low voltage, only phase cutting of the mains voltage is used.

Such system has the disadvantage that during welding there is a direct connection between the mains voltage and the pins for connection to the sleeve. There is in practice no electrical insulation between the user device and the mains and it is therefore necessary to provide a residual-current protection against accidental direct contacts.

A second disadvantage of such system is that, if the electronic switch fails, the mains voltage might be present at the terminals of the sleeves without any control.

A further inconvenience is the considerable weight of the welder caused by the large transformer that must be used.

The aim of the present invention is to overcome the problems of the prior art welders described above.

Within the scope of this aim, an important object of the present invention is to provide a welder which is safe for the operators.

Another important object of the present invention is to provide a lightweight welder.

Another object of the present invention is to provide a welder which can be used with all types of sleeves for joining plastic pipes.

This aim and these and other objects, which will become better apparent hereinafter, are achieved by a welder for sleeves for joining plastic pipes, characterized in that it comprises a high-frequency AC/DC converter which draws electric mains current, and a transformer which draws the current from said converter and sends it to the terminals to be connected to the sleeves to be welded, said transformer having two separate secondary windings, which can be inserted selectively by a control means, respectively a first secondary winding for the low-voltage supply of a first pair of said terminals and a second secondary winding for the high-voltage supply of a second pair of said terminals.

Preferably, the high-frequency AC/DC converter is a full-bridge converter.

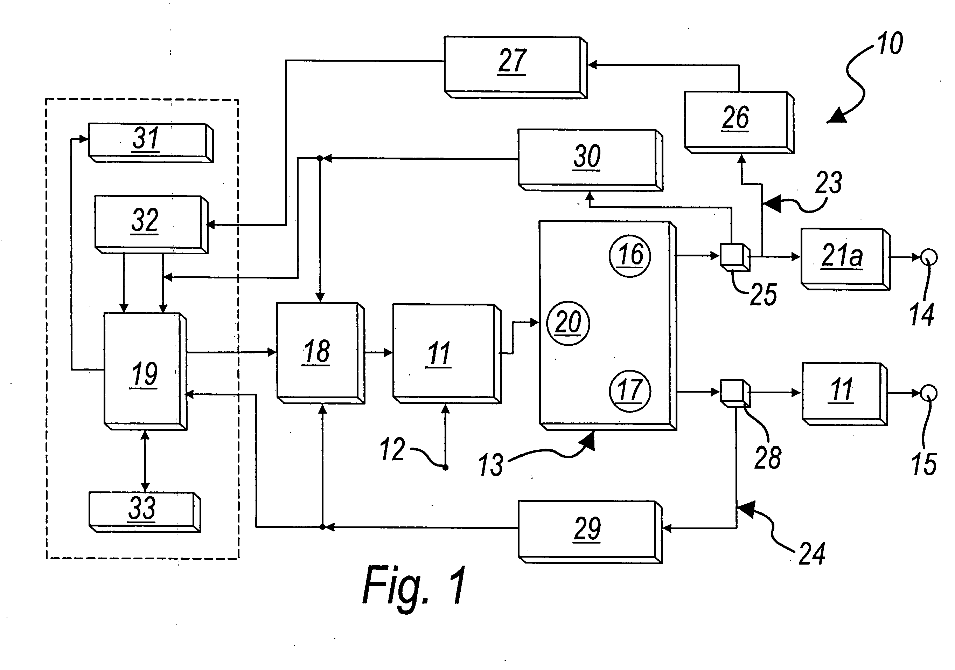

Further characteristics and advantages of the invention will become better apparent from the description of a preferred but not exclusive embodiment thereof, illustrated by way of non-limiting example in the accompanying drawing showing a block diagram of a welder according to the invention.

With reference to the figure, a welder according to the invention is generally designated by the reference numeral 10.

The welder includes a high-frequency AC/DC converter 11, which draws the mains electric current (the input is designated by the reference numeral 12); the converter 11 is of the full-bridge type.

In output to the converter 11, there is a transformer 13, which draws current from the converter and sends it to the terminals 14 and 15 to be connected to the sleeve to be welded (not shown in the figures).
According to the invention, the transformer 12 has two separate secondary windings, respectively a first winding 16 for low-voltage (8-44 V) power supply of a first pair of terminals 14 and a second winding 17 for high-voltage (20-230 V) power supply of a second pair of terminals 15.

The mains voltage (230 V AC, 50/60 Hz) enters the module which forms the high-frequency AC/DC converter 11, where it is transformed into DC voltage by a single-phase double half-wave rectifier (not shown in the figure); the DC voltage supplies the full bridge.

The driving sequences of the full bridge are generated by means of a driver 18 by a microcontroller 19 which operates at the frequency of 26 kHz.

A square wave, which has a fixed frequency and a variable duty cycle and is capable of varying the average voltage at its secondary windings 16 and 17, is applied to the transformer 13 at its primary winding 20.

The resulting voltage is rectified by rectifier modules: a first rectifier module 21 a downstream of the first secondary winding 16 and a second rectifier module 21 b downstream of the second secondary winding 17. The modules are formed by fast Schottky diodes. The voltage is finally applied to the output terminals 14 and 15.

In order to automatically determine which secondary winding 16 or 17 is to be used, a control means (not shown in the figure) is provided. The control means is constituted by detectors which are associated with the terminals 14 and 15 and read the value of the electrical resistance of the sleeve being welded and send an activation signal to a corresponding safety relay (not shown in the figure), which excludes the second secondary winding if high voltage is not used.

A means for feedback control of overcurrents in output from the transformer 13 is provided. The feedback control means is divided into two separate assemblies, a first voltage-controlled feedback control assembly 23, with respect to the first secondary winding 16 (low-voltage part) and a second current-controlled feedback control assembly 24, with respect to the second secondary winding 17 (high-voltage part); the modules that compose the assemblies 23 and 24 are of a substantially known type.

The feedback of the low-voltage part is voltage-controlled.

The output voltage of the first secondary winding 16 arrives at a first signal conditioning module 27, through a first current measurement module 25, arranged between the first rectifier module 21 a and the first secondary winding 16, and through a voltage measurement module 26, directly downstream thereof. The output voltage of the first secondary winding 16 arrives at the first signal conditioning module 27 thorough an isolator (not shown in the diagram). The output voltage is processed in the first signal conditioning module 27 in order to make it compatible with the input of the microcontroller 19.

The microcontroller corrects the driving of the driver 18 to provide a constant voltage output.

The microcontroller 19 blocks the driving of the full bridge of the converter 11, by means of an interrupt (not shown in the figures), if an overcurrent signal arrives from the first current measurement module 25. The same signal brings the welder to inherent safety conditions by acting directly on the driver.

Feedback of the high-voltage part is performed in a similar manner but in a current-controlled manner.

The output current arrives at a second signal conditioning module 29, through a second current measurement module 28, arranged between the second secondary winding 17 and the second rectifier module 21 b.

The output current arrives at the second signal conditioning module 29 through an isolator (not shown in the diagram). The output current is processed in the second signal conditioning module 29 in order to make it compatible with the input of the microcontroller 19. The microcontroller 19 corrects the driving of the driver 18 in order to provide a constant-current output.

As- in the low-voltage part, the microcontroller 19 blocks the driving of the full bridge of the converter 11, by means of an interrupt (not shown in the diagram), if an overcurrent signal arrives from the second current measurement module 28. The same signal brings the welder to inherent safety conditions by acting directly on the driver.

Feedback current control is provided also on the first secondary winding 16 by drawing current from the first current measurement module 25 and sending it to a third signal conditioning module 30, where it is processed in order to make it compatible with the input of the microcontroller 19 or of the driver 18.

The welder also has a user interface block, which includes a display 31 and a keyboard 32 (such as a membrane keyboard).

The information related to the machine (language, serial number, et cetera) are saved in a memory module 33.

In practice it has been found that the invention thus described achieves the intended aim and objects.

With the use of an AC/DC converter, preferably of the full bridge type, with a particular transformer with two independent secondary windings, the voltage applied to the sleeves, operating at high voltage or low voltage, is always inherently isolated from the power supply voltage of the welder.

Also, in case of failure of the electronic switches, the transformer becomes an impassable barrier toward the output circuits, because it sees a DC voltage.

The weight of the apparatus is considerably reduced by the much smaller dimensions of the high-frequency transformer.

The invention thus conceived is susceptible of numerous modifications and variations, within the scope of the appended claims. All the details may be replaced with other technically equivalent elements.

In practice, the materials used, so long as they are compatible with the specific use, as well as the dimensions, may be any according to the requirements and the state of the heart.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

This application claims the priority of Italian Patent Application No. PD2006A000427, filed on November 15, 2006, the subject matter of which is incorporated herein by reference.

## Claims

1. A welder for sleeves for joining plastic pipes, **characterized in that** it comprises a high-frequency AC/DC converter (11) which draws electric mains current, and a transformer (13) which draws the current from said converter (11) and sends it to the terminals (14, 15) to be connected to the sleeves (14, 15) to be welded, said transformer (13) having two separate secondary windings (16, 17), which can be inserted selectively by a control means, respectively a first secondary winding (16) for the low-voltage supply of a first pair (14) of said terminals (14, 15) and a second secondary winding (17) for the high-voltage supply of a second pair (15) of said terminals (14, 15).

2. The welder according to claim 1, **characterized in that** said high-frequency AC/DC converter (11) is of the full bridge type.

3. The welder according to one or more of the preceding claims, **characterized in that** it comprises modules for rectifying the current in output to said terminals (14, 15), respectively a first rectifier module (21 a) downstream of said first secondary winding (16) and a second rectifier module (21 b) downstream of the second secondary winding (17).

4. The welder according to claim 3, **characterized in that** said modules (21) for rectifying the current in output to said terminals (14, 15) are formed by Schottky fast diodes.

5. The welder according to one or more of the preceding claims, **characterized in that** it comprises a feedback control means (23, 24) for overcurrents in output from said transformer (13).

6. The welder according to claim 5, **characterized in that** said means (23, 24) for feedback control of overcurrents in output from said transformer (13) comprises two separate assemblies, a first voltage-based feedback control assembly (23) related to said first secondary winding (16) and a second current-based feedback control assembly (24) related to said second secondary winding (17).

7. The welder according to claim 6, **characterized in that** said first feedback control assembly (23) provides for a first current measurement module (25) which is arranged between a first rectifier module (21 a) and said first secondary winding (16), and, directly downstream of said first current measurement module (25), a voltage measurement module (26), the output of which is connected directly to a first signal conditioning module (27), where it is processed in order to make it compatible with the input of a microcontroller (19) which corrects the driving of a driver (18) in order to provide a constant-voltage output, said microcontroller (19) blocking, by means of an interrupt, the driving of the full bridge of said converter (11) if an overcurrent signal arrives from said first current measurement module (25), said second feedback control assembly (24) comprising a second current measurement module (28) which is arranged between said second secondary winding (17) and a second rectifier module (21 b), said second current measurement module (28) being connected to a second signal conditioning module (29), wherein the current is processed in order to make it compatible with the input of said microcontroller (19) suitable to correct the driving of said driver (18) to provide a constant-current output, said microcontroller (19) blocking, by means of an interrupt, the driving of said full bridge of said converter (11) if an overcurrent signal arrives from said second current measurement module (28), a third module (30) being provided for conditioning the signal that arrives from said first current measurement module (25), wherein the current is processed to make it compatible with the input of said microcontroller (19) or of said driver (18).

8. The welder according to the preceding claim, **characterized in that** said control means is constituted by detectors which are associated with said terminals (14, 15) and read the value of the electric resistance of the sleeve being welded and send an activation signal to corresponding safety relay which excludes said second secondary winding (17) when high voltage must not be used.

9. The welder according to one or more of the preceding claims, **characterized in that** it comprises a user interface block which comprises a display (31), a keypad (32) and a memory module (33), all of which are connected to said microprocessor (19).
